Europäisches Patentamt

European Patent Office

Office européen des brevets

(11) Publication number:

**0 354 971**

**A1**

## EUROPEAN PATENT APPLICATION
## published in accordance with Art. 158(3) EPC

(21) Application number: 89902528.2

(22) Date of filing: 15.02.89

(86) International application number:
PCT/JP89/00148

(87) International publication number:
WO 89/07801 (24.08.89 89/20)

(51) Int. Cl.⁴ **G06F 15/60**

(30) Priority: 15.02.88 JP 32054/88

(43) Date of publication of application:
21.02.90 Bulletin 90/08

(84) Designated Contracting States:
DE FR GB IT

(71) Applicant: FANUC LTD
3580, Shibokusa Aza-Komanba Oshino-mura
Minamitsuru-gun Yamanashi 401-05(JP)

(72) Inventor: SEKI, Masaki
3-15-2-406, Takaido-nishi
Suginami-ku Tokyo 168(JP)
Inventor: TAKEGAHARA, Takashi
256-2, Nishiterakata-cho
Hachioji-shi Tokyo 192-01(JP)
Inventor: YAMAKI, Katsunobu Fanuc Dai-3
Vira-karamatsu
3527-21 Shibokusa Oshino-mura
Minamitsuru-gun Yamanashi 401-05(JP)

(74) Representative: Billington, Lawrence Emlyn et al
HASELTINE LAKE & CO Hazlitt House 28
Southampton Buildings Chancery Lane
London WC2A 1AT(GB)

(54) METHOD OF DESIGNATING RECTANGULAR PARALLELEPIPED REGION.

(57) A plan view (PLV) and a front view (FRV) of a three-dimensional object (OB) are drawn, and a cross cursor (CS) is displayed. The cross cursor (CS) is used to define a predetermined rectangular parallelepiped region (REp) on the plan view (PLV) and a predetermined rectangular parallelepiped region (REf) on the front view (FRV). The vertex coordinates of the rectangular parallelepiped are calculated using the defined regions (REp, REf) to determine a rectangular parallelepiped region.

FIG. 1

OB    REp

PLV

P'3

P'1

CS

FRV

P"2

CRT

P"6

OB    REf

1

1a    1b

COMMAND
ANALYSIS
CONTROLLER
3

RECTANGULAR
PARALLELEPIPED
AREA ANALYZER
4

GRAPHIC
DISPLAY
CONTROLLER
5

CRT    6

KEYBOARD
2

DAT

MACHINING
SHAPE DATA

## DESCRIPTION

METHOD OF DESIGNATING RECTANGULAR PARALLELEPIPED AREA

### Technical Field

This invention relates to a method of designating a rectangular parallelepiped area and, more particularly, to a rectangular parallelepiped area designating method for designating a rectangular parallelepiped area of a three-dimensional displayed object.

### Background Art

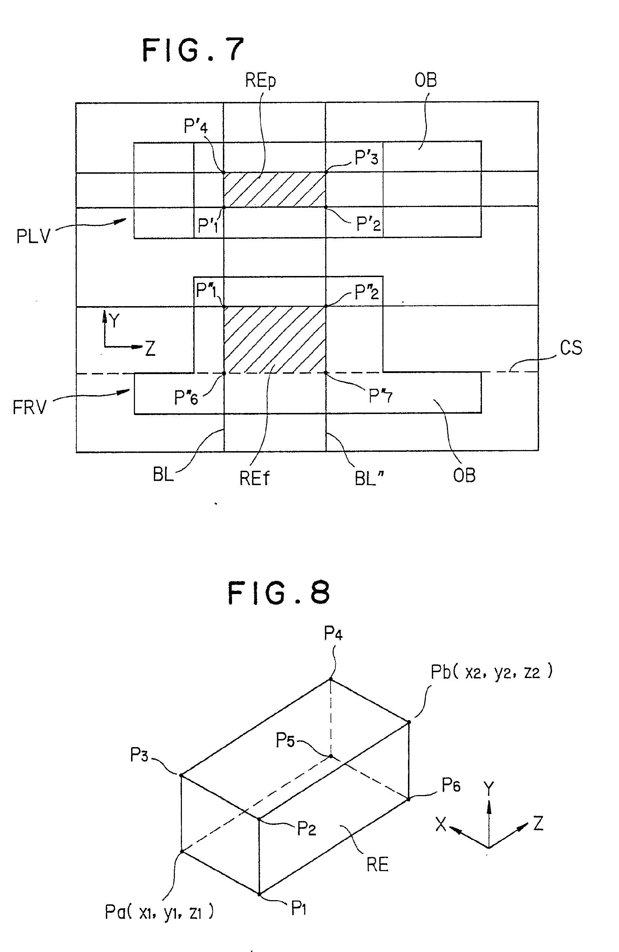

There are cases where it is desired to designate an arbitrary rectangular parallelepiped area on a display screen. In such cases, the conventional rectangular parallelepiped area designating method is such that the coordinates of two points on a diagonal of the rectangular parallelepiped are calculated on the desktop and the coordinates of these two points are entered to designate the desired rectangular parallelepiped area. More specifically, when a rectangular parallelepiped area RE shown in Fig. 8 is designated, the coordinates of two points on a diagonal, e.g., coordinates Pa $(x_1, y_1, z_1)$, Pb $(x_2, y_2, z_2)$ of points Pa, Pb are calculated on the desktop and entered using an input unit such as a keyboard. When this is done, the system computes the coordinates of the other apices P1, P2, ..., P6 which form the rectangular parallelepiped from the coordinates of the points Pa, Pb, and specifies the desired rectangular parallelepiped area by the coordinates of the apices.

With this conventional method, the rectangular parallelepiped area is considered using a design drawing or the like placed on the desktop. Consequently, it is difficult to set the rectangular parallelepiped area at an arbitrary position on a three-dimensional object displayed on a display screen. In addition, since the coordinates of the two points on the diagonal of the rectangular parallelepiped are calculated on the desktop, the calculations require a great deal of time.

Accordingly, an object of the present invention is to provide a rectangular parallelepiped area designating method in which a rectangular parallelepiped area can be designated utilizing a displayed graphic of a three-dimensional object, and in which the coordinates of the apices of the rectangular parallelepiped are computed automatically by the system merely by designating the boundary area of the rectangular parallelepiped, thereby making it possible to designate an area of the rectangular parallelepiped in a simple manner.

Disclosure of the Invention

The present invention provides a rectangular parallelepiped area designating method for designating a predetermined rectangular parallelepiped area in a three-dimensional displayed object displayed on a display screen. In the method of designating a rectangular parallelepiped area of the invention, at least two views from among a plan view, front view and side view of the three-dimensional displayed object are displayed on the display screen, a cursor is displayed, apex positions of a rectangular parallelepiped are designated in each view (e.g., in the plan and front views) using the cursor, the coordinates of each of the apices of the rectangular parallelepipeds are computed using coordinates of the apex positions designated in each view, and the rectangular parallelepiped area is specified by the coordinates of each apex.

Brief Description of the Drawings

Fig. 1 is a block diagram of an apparatus for practicing the present invention;

Fig. 2 is a flowchart of processing according to the invention;

Fig. 3 is a perspective view showing a machining shape and a rectangular parallelepiped area;

Fig. 4 is an explanatory view for setting one apex position in a plan view;

Fig. 5 is an explanatory view for setting other apex positions in a plan view;

Fig. 6 is an explanatory view of a rectangular parallelepiped area set in a plan view;

Fig. 7 is an explanatory view for setting a rectangular parallelepiped area in a front view; and

Fig. 8 is an explanatory view of the conventional method.

Best Mode for Carrying Out the Invention

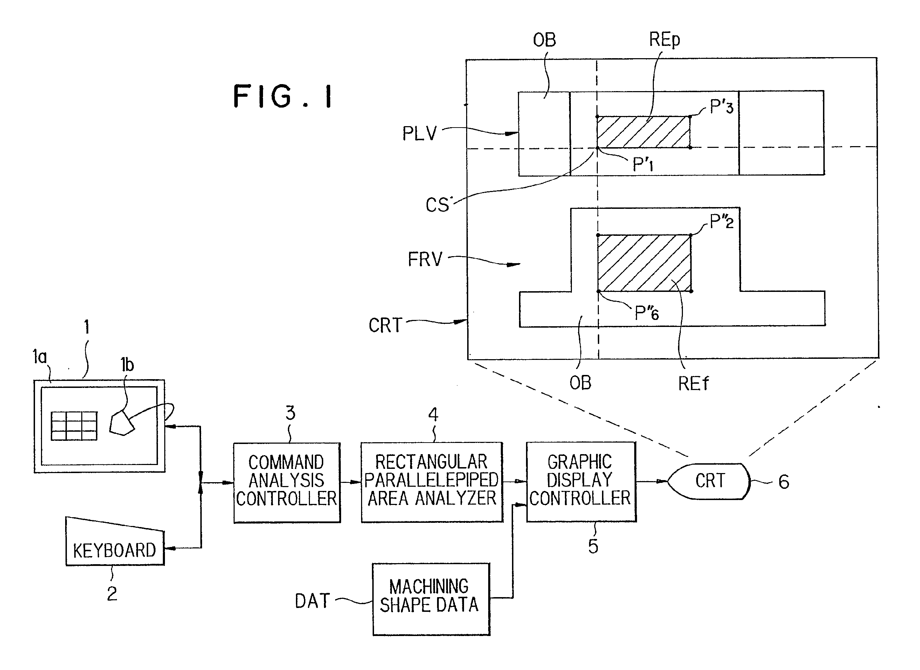

Fig. 1 is a block diagram of an apparatus for practicing the present invention.

Numeral 1 denotes a tablet device, 2 a keyboard, 3 a command analysis controller for analyzing commands entered from the tablet device 1, keyboard 2 and the like, 4 a rectangular parallelepiped area analyzer, 5 a graphic display controller, and 6 a display screen (CRT). DAT represents machining shape data. On the CRT 6, OB represents a machining shape, PLV a plan view of the machining shape, FRV a front view of the machining shape, REp, REf rectangular parallelepiped areas set in the plan view PLV and front view FRV, respectively, and CS a cursor in the shape of cross hairs.

By moving a tablet cursor (mouse) 1b on a tablet surface 1a of the tablet device 1, the cross-point of the cursor CS is moved on the CRT 6.

· The keyboard 2 is provided with cursor shift keys (e.g., keys "→", "←", "↑", "↓") for moving the cursor CS, which is displayed on the CRT 6, up, down, and left, right, and with an execute key (e.g., an "NL" key).

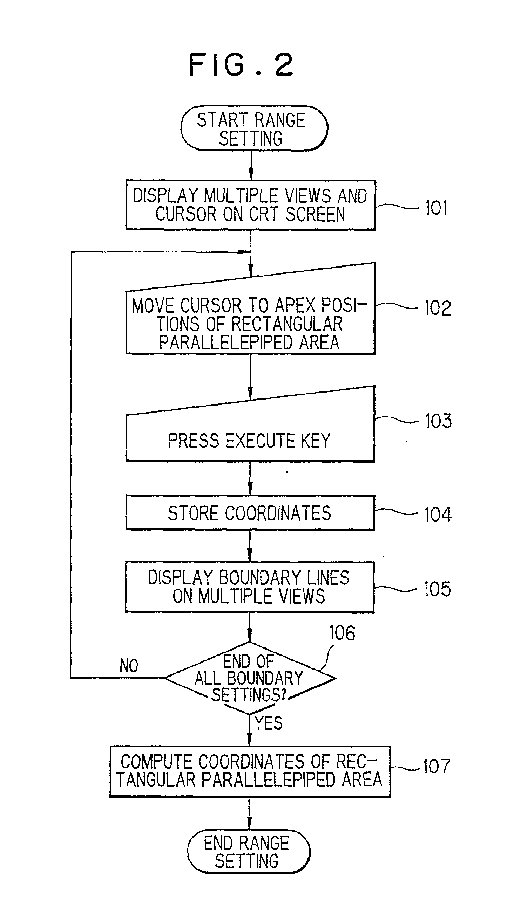

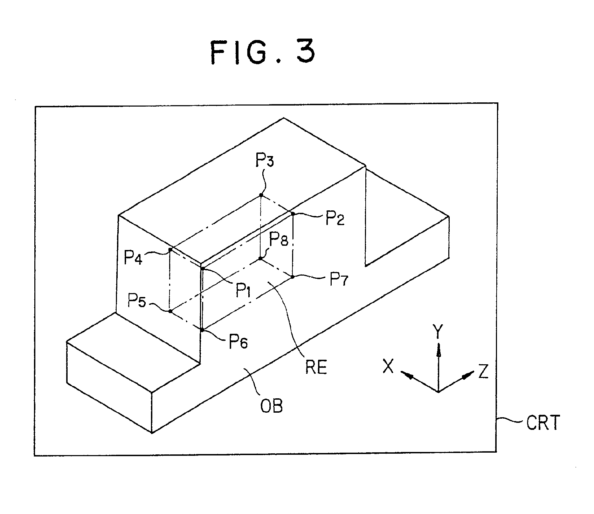

Fig. 2 is a flowchart of processing illustrating the method of designating a rectangular parallelepiped area according to the present invention. Processing for rectangular parallelepiped area designation processing according to the invention will now be described in accordance with the processing flowchart of Fig. 2. It should be noted that the machining shape OB shown in Fig. 3 is assumed to have already been defined as the machining shape data DAT and to be applied to the graphic display controller 5.

The operator starts the processing for rectangular parallelepiped area designation by a predetermined operation, with the aim being to designate a rectangular parallelepiped area RE formed by apices P1 - P8 in the machining shape OB (Fig. 3).

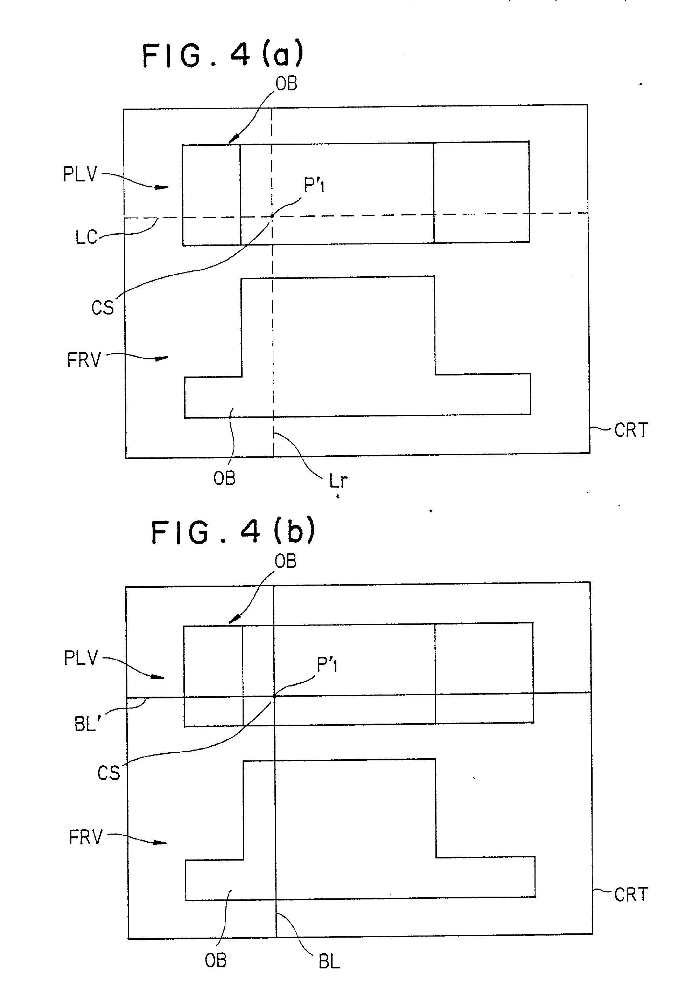

In response to starting of the processing for rectangular parallelepiped area designation, the graphic display controller 5 causes the plan view PLV [Fig. 4(a)], which is obtained by projecting the machining shape OB onto the X-Z plane, to be displayed on the upper half of the CRT screen 6, and causes the front view FRV, which is obtained by projecting the machining shape OB onto the Y-Z plane, to be displayed on the lower half of the CRT screen. Further, the graphic display controller 5 causes the cross-hair cursor CS, which is for designating a rectangular parallelepiped area, to be displayed at the center of the CRT screen 6 (step 101) on the plan view PLV and front view FRV. Note that the cross hairs of the cursor CS extend out fully to the edges of the display.

Under these conditions, the operator operates the cursor shift keys "→", "←", "↑", "↓" on the keyboard 2 to position the cross of the cross-hair cursor CS at a point P1' on the plan view PLV [see Fig. 4(a)]. When the keys "→", "←", "↑", "↓" are operated, the command analyzer controller 3 provides the rectangular parallelepiped area analyzer 4 with commands for moving the cross-hair cursor CS to predetermined positions in a predetermined direction at predetermined times during the time that the particular key is held depressed. On the basis of these commands, the rectangular parallelepiped area analyzer 4 updates the position of the cross-hair cursor CS and transfers the updated position to the graphic display controller 5. On the basis of this position data input, the graphic display controller 5 moves the position at which the cross-hair cursor CS is displayed on the CRT screen 6.

Since the point P1' is the X-Z projection point of the apex P1 of the rectangular parallelepiped area RE (Fig. 3), a vertical cross hair Lr and a horizontal cross hair Lc of the cross-hair cursor CS form the boundary lines of the rectangular parallelepiped area in the plan view (step 102). Thereafter, the execute key (NL key) on the keyboard 2 is pressed (step 103). When this is done, the rectangular parallelepiped area analyzer 4 stores, as one apex position of the rectangular parallelepiped, the position P1' of the cross hairs of cursor CS which prevails when the NL key is pressed. Further, the rectangular parallelepiped area analyzer 4 delivers boundary line display commands to the graphic display controller 5 to display boundary lines Bl, BL' of the rectangular parallelepiped on the multiple views [see Fig. 4(b); step 105].

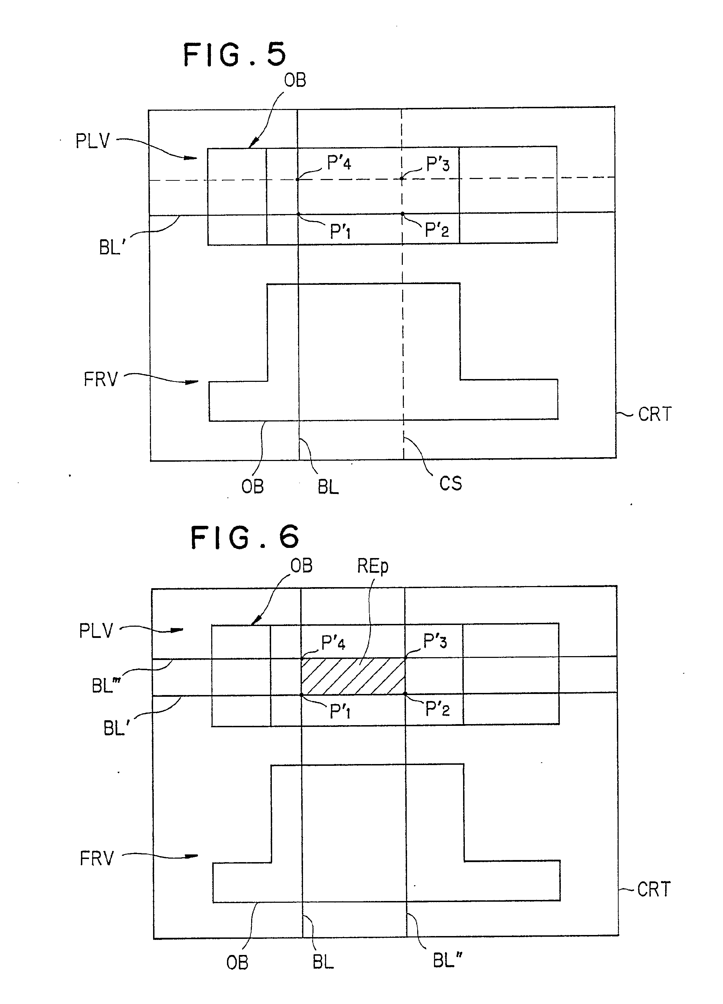

Next, the operator determines whether all boundary lines for specifying the rectangular parallelepiped area have been set (step 106). If all boundary lines have not been set, processing from step 102 onward is repeated. More specifically, the operator manipulates the cursor shift keys to position the cross hairs of the cursor CS at point P3' (see Fig. 5) on the plan view PLV. Here the point P3' is a point obtained by projecting the apex P3 onto the X-Z plane. Thereafter, the NL key is pressed, whereupon the rectangular parallelepiped area analyzer 4 stores the position P3' of the cross hairs of cursor CS as an apex position, calculates the coordinates of the other apices P2', P4' from the coordinates of apices P1', P3' already set, and causes the graphic display controller 5 to display the boundary lines. By virtue of the foregoing, the rectangular parallelepiped area REp (the shaded portion in Fig. 6) in the plan view PLV is specified. It should be noted that the rectangular parallelepiped area REp coincides with a rectangular shape obtained when the rectangular parallelepiped is projected onto the X-Z plane. This rectangular shape will be specified if at least the two points P1', P3' on one diagonal or the two points P2', P4' on the other diagonal are designated.

Thereafter, the rectangular parallelepiped area REf in the front view (the shaded portion in Fig. 7) is specified in the same manner. It should be noted that since boundary lines BL, BL" in the Z direction are positioned in the rectangular parallelepiped area REp of the plan view PLV, it will suffice to designate only upper- and lower-limit boundary lines in the Y direction when specifying the rectangular parallelepiped area REf. In other words, if the cross-hair cursor CS is placed on point P1" or P2" as the upper limit in the Y direction to designate the point and then on point P6" or P7" as the lower limit in the Y direction to designate the point, the rectangular parallelepiped area analyzer 4 will compute the coordinates of apices other than those of the points designated and cause the graphic display controller 5 to display the boundary lines.

Since a "YES" decision will be rendered at step 106 by virtue of the foregoing, the rectangular parallelepiped area analyzer 4 computes the three-dimensional coordinates of the apices P1 - P8 of the rectangular parallelepiped area RE using the coordinates of the points P1', P2', P3', P4' of the rectangular parallelepiped area REp and the coordinates of the points P1", P2", P6", P7" of the rectangular parallelepiped area REf, and then terminates the processing for designating the rectangular parallelepiped area RE.

Next, the operator performs a prescribed subsequent operation for enlarging, extracting or cutting away the designated rectangular parallelepiped area RE.

In the foregoing, designation of a rectangular parallelepiped area is performed using the keyboard 2. However, in a case where designation of a rectangular parallelepiped area is performed using the tablet device 1, the rectangular parallelepiped area can be designated just as when the keyboard 2 was used by placing the cross-hair cursor CS at prescribed positions in the plan view PLV and front view FRV.

Further, in the foregoing embodiment a case in described in which a rectangular parallelepiped area is is designated upon displaying two views, namely the plan view and front view, on the display screen. However, it is of course possible to designate a rectangular parallelepiped area upon displaying and two or more views from among a plan view, front view and side view.

In accordance with the present invention as described above, it is arranged to display multiple views of a three-dimensional displayed object, display a cross-hair cursor on the multiple views, designate positions of a rectangular parallelepiped area in each view using the cross-hair cursor, and specify the rectangular parallelepiped areas using the coordinates of the positions designated. As a result, a rectangular parallelepiped area can be designated in a displayed object quickly and easily.

CLAIMS:

1. A rectangular parallelepiped area designating method for designating a predetermined rectangular parallelepiped area in a three-dimensional displayed object displayed on a display screen, characterized by:

displaying at least two views from among a plan view, front view and side view of the three-dimensional displayed object on the display screen along with a cursor;

designating positions of apices of the rectangular parallelepiped area in each view using said cursor;

computing coordinates of each apex of a rectangular parallelepiped in each view using the coordinates of apex positions designated; and

specifying the rectangular parallelepiped area by the coordinates of each apex.

2. A rectangular parallelepiped area designating method according to claim 1, characterized in that positions of two points on a diagonal of a rectangular shape obtained by projecting the rectangular parallelepiped onto each view are designated as said apex positions.

3. A rectangular parallelepiped area designating method according to claim 2, characterized in that when said two points on the diagonal are designated, said rectangular shape is displayed in each view.

4. A rectangular parallelepiped area designating method according to claim 1, characterized in that said cursor is a cross-hair cursor having cross hairs
displayed in full on the screen.

# FIG. 1

EP 0 354 971 A1

# FIG . 2

```
        ┌─────────────────┐
        │  START RANGE    │
        │    SETTING      │
        └────────┬────────┘
                 │
                 ▼
        ┌─────────────────────────┐
        │ DISPLAY MULTIPLE VIEWS AND │─── 101
        │ CURSOR ON CRT SCREEN    │
        └────────┬────────────────┘
                 │
                 ▼
        ┌─────────────────────────┐
        │ MOVE CURSOR TO APEX POSI-│─── 102
        │ TIONS OF RECTANGULAR    │
        │ PARALLELEPIPED AREA     │
        └────────┬────────────────┘
                 │
                 ▼
        ┌─────────────────────────┐
        │  PRESS EXECUTE KEY      │─── 103
        └────────┬────────────────┘
                 │
                 ▼
        ┌─────────────────────────┐
        │  STORE COORDINATES      │─── 104
        └────────┬────────────────┘
                 │
                 ▼
        ┌─────────────────────────┐
        │ DISPLAY BOUNDARY LINES  │─── 105
        │ ON MULTIPLE VIEWS       │
        └────────┬────────────────┘
                 │               106
                 ▼
              ◇ END OF         ◇
    NO ──── ◇ ALL BOUNDARY ◇
            ◇ SETTINGS? ◇
                 │ YES
                 ▼
        ┌─────────────────────────┐
        │ COMPUTE COORDINATES OF REC-│─── 107
        │ TANGULAR PARALLELEPIPED AREA │
        └────────┬────────────────┘
                 │
                 ▼
        ┌─────────────────┐
        │  END RANGE      │
        │   SETTING       │
        └─────────────────┘
```

# FIG. 3

# FIG. 4 (a)

OB

PLV

LC

CS

P'₁

FRV

CRT

OB

Lr

# FIG. 4 (b)

OB

PLV

BL'

CS

P'₁

FRV

CRT

OB

BL

# FIG.5

PLV

OB

P'4    P'3

BL'

P'1    P'2

FRV

CRT

OB    BL    CS

# FIG.6

OB    REp

PLV

BL'''

P'4    P'3

BL'

P'1    P'2

FRV

CRT

OB    BL    BL''

# FIG.7

# FIG.8

# INTERNATIONAL SEARCH REPORT

International Application No PCT/JP89/00148

**I. CLASSIFICATION OF SUBJECT MATTER** (if several classification symbols apply, indicate all) 6

According to International Patent Classification (IPC) or to both National Classification and IPC

Int.Cl$^4$   G06F15/60

**II. FIELDS SEARCHED**

| Minimum Documentation Searched 7 | |
|---|---|
| Classification System | Classification Symbols |
| IPC | G06F15/60, 15/62 |

Documentation Searched other than Minimum Documentation
to the Extent that such Documents are Included in the Fields Searched 8

| | |
|---|---|
| Jitsuyo Shinan Koho | 1972 – 1988 |
| Kokai Jitsuyo Shinan Koho | 1972 – 1988 |

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| Y | JP, A, 61-190668 (Cadmatic Computer Services K.Y.) 25 August 1986 (25. 08. 86) & FI, A, 850147 | 1-4 |
| Y | JP, A, 60-134979 (Mitsubishi Heavy Industries, Ltd.) 18 July 1985 (18. 07. 85) (Family: none) | 1-4 |
| Y | JP, A, 62-168272 (Ricoh Co., Ltd.) 24 July 1987 (24. 07. 87) (Family: none) | 2, 3 |
| Y | JP, A, 61-94135 (Fujitsu Ltd.) 13 May 1986 (13. 05. 86) (Family: none) | 4 |
| Y | JP, A, 60-134984 (Matsushita Graphic Communication Systems, Inc.) 18 July 1986 (18. 07. 86) (Family: none) | 4 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| March 8, 1989 (08. 03. 89) | March 20, 1989 (20. 03. 89) |
| International Searching Authority | Signature of Authorized Officer |
| Japanese Patent Office | |

Form PCT ISA 210 (second sheet) (January 1985)